# EUROPÄISCHE PATENTSCHRIFT

(11) **EP 3 122 589 B1**
(45) Veröffentlichungstag und Bekanntmachung des Hinweises auf die Patenterteilung: **22.08.2018**
(21) Anmeldenummer: 15710531.3
(22) Anmeldetag: 19.03.2015
(51) Int. Cl.: B60L 11/18, H01R 31/06, H01R 13/639, H01R 13/502, B60L 3/00

(54) **ALS KUPPLUNG ODER STECKER AUSGEBILDETE STECKVORRICHTUNG**
PLUG-TYPE APPARATUS WHICH IS IN THE FORM OF A COUPLING OR PLUG
DISPOSITIF EMBROCHABLE RÉALISÉ SOUS FORME DE PROLONGATEUR OU DE FICHE

(30) Priorität: 26.03.2014 DE 202014101430 U
(43) Veröffentlichungstag der Anmeldung: 01.02.2017
(73) Patentinhaber: Bals Elektrotechnik GmbH & Co. KG, 57399 Kirchhundem (DE)
(72) Erfinder: RAMM, Andreas, 57399 Kirchhundem (DE)
(74) Vertreter: Blumbach · Zinngrebe Patent- und Rechtsanwälte
(86) Internationale Anmeldenummer: PCT/EP2015/055819
(87) Internationale Veröffentlichungsnummer: WO 2015/144564

(56) Entgegenhaltungen:
- DE-A1- 19 509 336
- US-A1- 2012 315 801
- US-B1- 7 404 720

## Beschreibung

Die Erfindung betrifft eine als Ladesteckvorrichtung für Elektrofahrzeuge ausgebildete Steckvorrichtung.

Für die Beschreibung und die Ansprüche bezeichnen in Bezug auf eine Steckvorrichtung die Begriffe "Dose" bzw. "Steckdose" eine fest eingebaute Steckvorrichtung mit weiblichen elektrischen Kontakten, d.h. mit Kontaktbuchsen bzw. nach innen weisenden Kontaktöffnungen, und in Abgrenzung hiervon der Begriff "Kupplung" eine am Ende eines Kabels angebrachte (und dieses somit zu einer Seite hin abschließende) Steckvorrichtung mit weiblichen elektrischen Kontakten. Entsprechend bezeichnet der Begriff "Stecker" eine am Ende eines Kabels angebrachte Steckvorrichtung mit männlichen elektrischen Kontakten, d.h. mit nach außen weisenden Kontaktstiften, und in Abgrenzung hiervon der Begriff "Einbaustecker" eine fest eingebaute Steckvorrichtung mit männlichen elektrischen Kontakten.

Bekanntermaßen enthalten solche Steckvorrichtungen, wie zum Beispiel Stecker oder Dosen bzw. Kupplungen, für Kraftstrom nach DIN VDE 0623, EN 60309-2 ("CEE-Steckvorrichtungen") typischerweise in einem Gehäuse einen Kontaktbaustein mit darin eingesetzten elektrischen Kontakten (Stifte oder Buchsen). In den Kontaktbaustein kann von einer Zugangsseite her ein komplementär ausgebildetes Steckvorrichtungselement (Kupplung/Dose oder Stecker) eingeführt werden, um einen elektrischen Kontakt zu den Kontaktelementen herzustellen. Es ist ferner bekannt, die Zugangsseite derartiger Steckvorrichtungen mit einem Deckel zu versehen, um sie im unbenutzten Zustand gegen das Eindringen von Schmutz und Feuchtigkeit zu schützen und gegen einen ungewollten Kontakt zu stromführenden Komponenten zu verhindern. Vor dem Einführen eines komplementären Steckvorrichtungselementes muss ein solcher Deckel vom Benutzer in eine Öffnungsposition überführt werden.

Ferner dürfen z.B. nach IEC 62196 (Stecker, Steckdosen, Fahrzeugkupplungen und Fahrzeugstecker - Konduktives Laden von Elektrofahrzeugen), insbesondere nach IEC 62196-1, oder nach DIN EN 61851-1 (Elektrische Ausrüstung von Elektro-Straßenfahrzeugen - Konduktive Ladesysteme für Elektrofahrzeuge) und nach IEC 62196-2 (Anforderungen und Hauptmaße für AC-Ladesteckvorrichtungen), berührbare leitfähige Teile unter üblichen Bedingungen, d.h. bei fehlerfreiem Betrieb bei bestimmungsgemäßem Gebrauch, und unter Einzelfehlerbedingungen nicht zu gefährlichen aktiven Teilen werden. Im Rahmen von Ladesystemen für Elektrofahrzeuge ist demnach die Steckdose, nachfolgend auch als Ladesteckdose bezeichnet, Bestandteil der Ladeinfrastruktur, z.B. einer Ladesäule, und erlaubt die Verwendung einer Ladeleitung, nachfolgend auch als Ladekabel bezeichnet, mittels eines daran an einem Ende angebrachten Steckers, nachfolgend auch als Ladestecker bezeichnet. Am anderen Ende des Ladekabels ist die Fahrzeugkupplung angebracht, nachfolgend auch als Ladekupplung bezeichnet, und den hierzu komplementären Einbaustecker bildet der Fahrzeugstecker als Bestandteil des Elektrofahrzeuges.

Insbesondere auch basierend auf obiger IEC 62196, ist der Schutz gegen elektrischen Schlag durch die Anwendung entsprechender Schutzmaßnahmen sowohl bei üblichem Betrieb als auch im Fehlerfall sicherzustellen, wobei der Schutz gegen direktes Berühren aus einer oder mehreren Maßnahmen bestehen muss, die unter üblichen Bedingungen eine Berührung von gefährlichen aktiven Teilen verhindert. Eine an das Stromversorgungsnetz angeschlossene Energieversorgungseinheit darf keine zugänglichen, gefährlichen aktiven Teile enthalten, auch nicht, nachdem Teile, die ohne Zuhilfenahme von Werkzeugen abgenommen werden können, entfernt wurden. Ferner ist dem Eindringen von Nässe und Schmutz generell zumindest derart vorzubeugen, dass sämtliche elektrischen Teile, wie z.B. Anschlussklemmen, stromführende Kontakte und Leiteranschlüsse, Schalter und/oder Platine nicht mit Feuchtigkeit in Berührung kommen oder aufgrund von anderweitigen Schmutzeinlagerungen elektrischen Störungen unterliegen.

Zum Zeitpunkt der Anmeldung definiert die Norm IEC 62196-2 Ladesteckvorrichtungen unterschiedlicher Typen, die im gesteckten Zustand grundsätzlich zumindest die Schutzart IP 44 einhalten müssen. Durch Kommunikation über zwei Steuerkontakte mit dem Elektrofahrzeug wird ferner erst nach dem Stecken der Ladeleitung auf beiden Seiten die Energie zugeschaltet und somit sichergestellt, dass niemals die Gefahr eines Stromschlags besteht oder unter Belastung eingesteckt oder herausgezogen wird. Ladesteckdosen und Fahrzeugstecker nach "Typ 2" beispielsweise, verfügen über eine Verriegelung, die den Ladestecker bzw. die Ladekupplung während des Ladevorgangs gegen unbeabsichtigtes Herausziehen blockiert. Bei entsprechenden Ladesteckvorrichtungen ohne Verriegelung ist dies durch den Anwender zu realisieren, um Normenkonformität herzustellen. Ladestecker und Ladekupplungen nach "Typ 2" sind je nach Ausführung für das 1-phasige und 3-phasige Laden von Elektrofahrzeugen von 16 A bis 63 A definiert und verfügen neben den Hauptstromkontakten (L1, L2, L3, N und PE) über zwei zusätzliche Steuerkontakte (CP und PP) zur Datenübertragung und Leitungserkennung und -kodierung. Die entsprechenden Ladesteckvorrichtungen nach Typ 1 sind für 1-phasiges Laden bis 32 A (Europa) für die Elektrofahrzeuge der ersten Generation aus Japan, USA usw. ausgelegt und verfügt neben den Hauptstromkontakten (L, N und PE) über zwei zusätzliche Steuerkontakte (CP und CS) zur Datenübertragung und Verriegelungsanzeige.

Dokument DE 195 09 336 A1 zeigt einen Ladestecker mit einem Hauptgehäuse und einem Seitengehäuse.

Dokument US 2012/315801 A1 zeigt einen Ladestecker mit einem sechsstückige Gehäuse. Ist folglich bei einer solchen, als Kupplung oder Stecker ausgebildeten Ladesteckvorrichtung ein Verriegelungsmechanismus zur Verriegelung der Ladesteckvorrichtung im gesteckten Zustand mit einer zu der Steckvorrichtung komplementären Ladesteckvorrichtung vorgesehen, muss dieser Verriegelungsmechanismus üblicherweise zur Einhaltung geforderter Normen und Schutzarten üblicherweise innerhalb eines Gehäuses mechanisch beweglich gehalten sein und dennoch auch außerhalb des Gehäuses eine Wirkung entfalten können. Ferner ist ein solcher Verriegelungsmechanismus üblicherweise zur Einhaltung geforderter Normen mit Steuerkontakten gekoppelt, um über diese im gesteckten Zustand anzuzeigen, ob er verriegelt ist oder nicht.

Problematisch ist hierbei, dass aufgrund der Bewegung der Verriegelungs-Betätigungseinheit in der Regel zwangsläufig Öffnungen entstehen und Spiel vorhanden sein muss, welche zur Folge haben, dass Feuchtigkeit in das Gehäuse eintreten kann. Andererseits muss, insbesondere auch zur Einhaltung geforderter Normen und Schutzarten, üblicherweise gewährleistet sein, dass die hierrüber eindringende Feuchtigkeit nicht mit weiteren elektrischen Bauteilen der Ladesteckvorrichtung, wie z.B. Anschlussklemmen, stromführende Kontakte, Leiteranschlüsse, Schalter und/oder Platine, in Berührung kommt. Ein separates Abdichten der jeweiligen elektrischen Bauteile ist häufig jedoch sehr aufwendig. Das Anfertigen eines die zu schützenden elektrischen Bauteile insgesamt umgebenden Spritzgussgehäuses setzt einer individuellen Konfektionierbarkeit enge Grenzen und ermöglicht in der Regel keine nachträgliche Austauschbarkeit von Komponenten.

Aufgabe der Erfindung ist es, eine als Kupplung oder Stecker ausgebildete Steckvorrichtung, insbesondere eine als Ladesteckvorrichtung für Elektrofahrzeuge ausgebildete Steckvorrichtung, zu schaffen, die bei bestimmungsgemäßem Gebrauch im gesteckten Zustand mit einer zu der Steckvorrichtung komplementären Steckvorrichtung eine Sicherung gegen unbeabsichtigtes Lösen ermöglicht, auf einfache Weise die elektrischen Bauteile der Steckvorrichtung vor Berührung und gegen Feuchtigkeit und Schmutz von außen schützt, und zweckmäßig ferner kostengünstig herstellbar und flexibel konfektionierbar ist.

Eine erfindungsgemäße Lösung dieser Aufgabe ist durch eine Steckvorrichtung mit den Merkmalen nach Anspruch 1 gegeben. Weitere zweckmäßige Ausgestaltungen sind in den Unteransprüchen enthalten.

Die Erfindung schlägt dementsprechend eine als Kupplung oder Stecker ausgebildete Steckvorrichtung, insbesondere eine als Ladesteckvorrichtung für Elektrofahrzeuge ausgebildete Steckvorrichtung vor, die elektrische Bauteile und eine bewegliche Verriegelungs-Betätigungseinheit zur Verriegelung der Steckvorrichtung im gesteckten Zustand mit einer zu der Steckvorrichtung komplementären Steckvorrichtung, sowie ein Gehäuse, innerhalb welchem die elektrischen Bauteile und die Verriegelungs-Betätigungseinheit mechanisch gehalten sind. Die Steckvorrichtung zeichnet sich dadurch aus, dass das Gehäuse aus wenigstens drei Gehäuseteilen aufgebaut ist, der erste Gehäuseteil zusammen mit einem zweiten Gehäuseteil unter Bildung einer außen am Gehäuse entlanglaufenden Anlagekante eine erste Gehäusekammer ausbildet und zwischen dem zweiten Gehäuseteil und wenigstens einem weiteren, dritten Gehäuseteil wenigstens eine weitere Gehäusekammer ausgebildet ist, wobei sich der zweite Gehäuseteil zwischen der ersten Gehäusekammer und der wenigstens einen weiteren Gehäusekammer erstreckt. Die Verriegelungs-Betätigungseinheit ist in der ersten Gehäusekammer mechanisch gehalten und die elektrischen Bauteile sind in der wenigstens einen weiteren Gehäusekammer mechanisch gehalten.

Wesentliche Vorteile hierbei sind, dass auf einfache Weise eine mehrere Kammern umfassende Gehäusestruktur geschaffen ist, so dass zum einen zur Sicherung gegen unbeabsichtigtes Lösen, insbesondere während eines Ladevorgangs, mechanisch bewegbare Bauteile im Gehäuse weitgehend integrierbar und also gegenüber der Mechanik schädlichen äußeren Einwirkungen weitgehend geschützt sind und zum anderen die elektrischen Bauteile in einer hiergegenüber räumlich durch ein Gehäuseteil getrennten Gehäusekammer, d.h. in einem jeweiligen Hohlraum, im Gehäuse angeordnet werden können, und die elektrischen Bauteile allein durch diese räumliche Trennung im Wesentlichen bereits weitgehend vor Feuchtigkeit, die durch Gehäuseöffnungen eindringen kann, welche für diese mechanisch bewegbaren Bauteile zum Zusammenwirken mit einer komplementären Steckvorrichtung gegebenenfalls bereitzustellen sind, geschützt werden können bzw. sind. Mittels der durch das erste Gehäuseteil zusammen mit dem zweiten Gehäuseteil gebildeten, außen am Gehäuse entlanglaufenden Anlagekante kann zudem auf einfachste Weise in die erste Gehäusekammer eindringende Feuchtigkeit nach außen abgeführt werden und der Gefahr einer Stauwasserbildung effektiv entgegengewirkt werden. Die erfindungsgemäße Steckvorrichtung genügt diesbezüglich folglich grundsätzlich zumindest der Schutzart IP 44. Vorteilhafter kann ferner durch die Nutzung eines gemeinsamen Gehäuseteils zur Bildung getrennter Gehäusekammern die Anzahl und Ausgestaltung der benötigten Bauteile optimiert werden.

Weil sowohl die elektrischen Bauteile als auch die bewegliche Verriegelungs-Betätigungseinheit innerhalb eines Gehäuses, d.h. von außen betrachtet innerhalb eines gemeinsamen Gehäuses, mechanisch gehalten sind, eignet sich die erfindungsgemäße Steckvorrichtung somit insbesondere auch für eine, ein Ladekabel für Elektrofahrzeuge zu einer Seite hin abschließende Ladesteckvorrichtung.

Insbesondere für eine Eignung als Ladesteckvorrichtung besitzt die Verriegelungs-Betätigungseinheit gemäß einer bevorzugten Ausführung ein von außerhalb des Gehäuses betätigbares Betätigungsende und ein Verriegelungsende, welches sich aus der ersten Gehäusekammer hinaus nach außen aus dem Gehäuse erstreckt.

Gemäß einer weiteren bevorzugten Ausführung zur nochmals verbesserten Abführung von Feuchtigkeit und Vorbeugung jeglicher Stauwasserbildung ist durch entsprechende Formgebung des ersten Gehäuseteils für die Verriegelungs-Betätigungseinheit wenigstens ein Durchgang aus der ersten Gehäusekammer hinaus nach außen aus dem Gehäuse ausgebildet und erstreckt sich der Körper des zweiten Gehäuseteils im Innern des Gehäuses in Richtung des ersten Gehäuseteils zumindest teilweise hinausgehend über die außen am Gehäuse entlanglaufende Anlagekante.

In zweckmäßiger Weiterbildung sind darüber hinaus ferner zur Abdichtung der wenigstens einen weiteren Gehäusekammer gegenüber von außen einwirkender Feuchtigkeit Dichtungseinrichtungen angeordnet, wobei insbesondere an den Außenkanten des zweiten Gehäuseteils und des wenigstens einen weiteren dritten Gehäuseteils Dichtungseinrichtungen auch mit Nuten und/oder Stege ausgebildet sind.

Bevorzugt ist ferner in einer an der wenigstens einen weiteren Gehäusekammer ausgebildeten Kabeldurchführungsöffnung für ein von außerhalb des Gehäuses kommendes, an die Steckvorrichtung angeschlossenes oder anschließbares Kabel ausbildet, eine Ringdichtung eingesetzt, aufgenommen, einsetzbar oder aufnehmbar, insbesondere eine zusätzlich einen Knickschutz bereitstellende Ringdichtung.

Zweckmäßig ist in eine durch die wenigstens eine weitere Gehäusekammer ausbildete Einsetzöffnung für einen in das Gehäuses eingesetzten oder einsetzbaren Kontaktbaustein mit darin eingesetzten elektrischen Kontakten eine Ringdichtung eingesetzt, aufgenommen, einsetzbar oder aufnehmbar und/oder eine über eine Halterungsvorrichtung an der Ladesteckvorrichtung gehaltene, manuell betätigbare Abdeckkappe zur Abdeckung von in einem Kontaktbaustein eingesetzten elektrischen Kontakten vorgesehen.

In besonders bevorzugter Ausbildung ist der erste Gehäuseteil an dem zweiten Gehäuseteil und der zweite Gehäuseteil an dem wenigstens einem weiteren dritten Gehäuseteil befestigbar, insbesondere unter Nutzung lösbarer Befestigungssysteme.

Je nach Anforderung ist ferner eine Sicherungseinrichtung zur Freigabe sowie zur Nichtfreigabe eines Stromflusses vorgesehen, wobei in diesem Fall die Verriegelungs-Betätigungseinheit bevorzugt zwischen einer ersten Stellung zur Verriegelung der Steckvorrichtung und einer zweiten Stellung beweglich gehalten ist und mit der Sicherungseinrichtung zweckmäßig gekoppelt ist, derart, dass der Sicherungseinrichtung zur Anzeige gelangt, ob die Verriegelungs-Betätigungseinheit in der ersten oder zweiten Stellung ist.

Weitere Merkmale und Vorteile der Erfindung ergeben sich aus der nachfolgend Beschreibung einer bevorzugten Ausführungsform unter Bezugnahme auf die beigefügten Zeichnungen. Dabei zeigen:
- Fig. 1: skizzenhaft eine Seitenansicht eines Ausführungsbeispiels einer erfindungsgemäßen Steckvorrichtung,
- Fign. 2 und 3: skizzenhaft zwei perspektivische Ansichten der Steckvorrichtung nach Fig. 1,
- Fig. 4: einen Schnitt durch und entlang die Steckvorrichtung gemäß Figur 1,
- Fig. 5: eine vergrößerte Ansicht des in Fig. 4 gestrichelt umrandeten Bereichs der Steckvorrichtung, und
- Fign. 6, 7 und 8: weitere verschiedene Ansichten der Steckvorrichtung nach Fig. 1 mit zumindest teilweise auseinandergerissenen Komponenten.

Nachfolgend wird das in den Figuren dargestellte Ausführungsbeispiel als eine bevorzugte Ausführungsform der Erfindung detaillierter beschrieben.

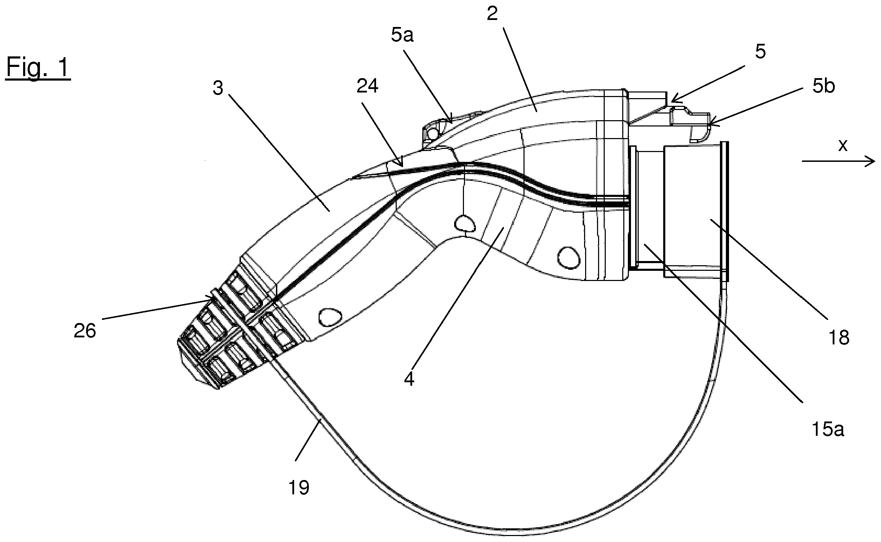

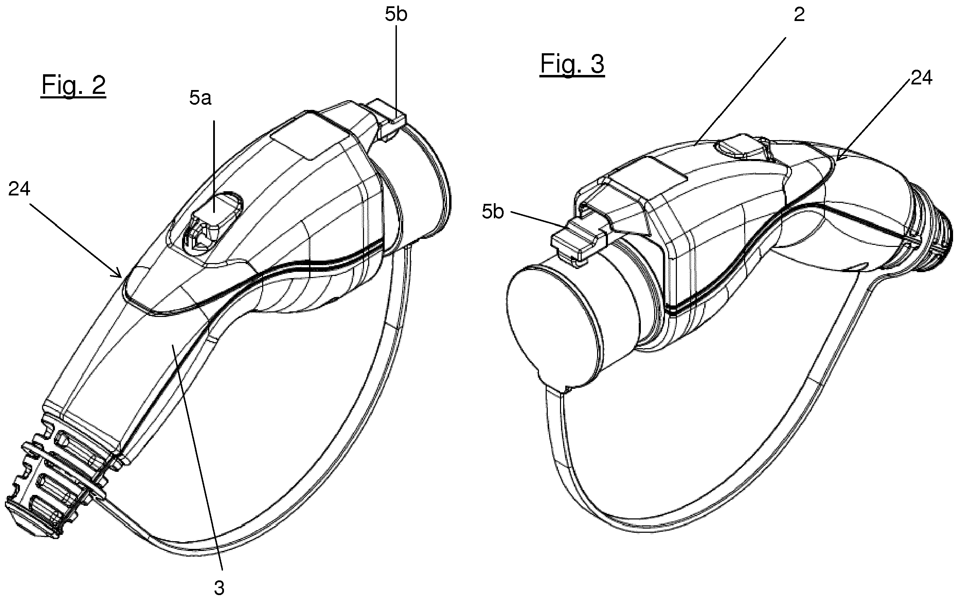

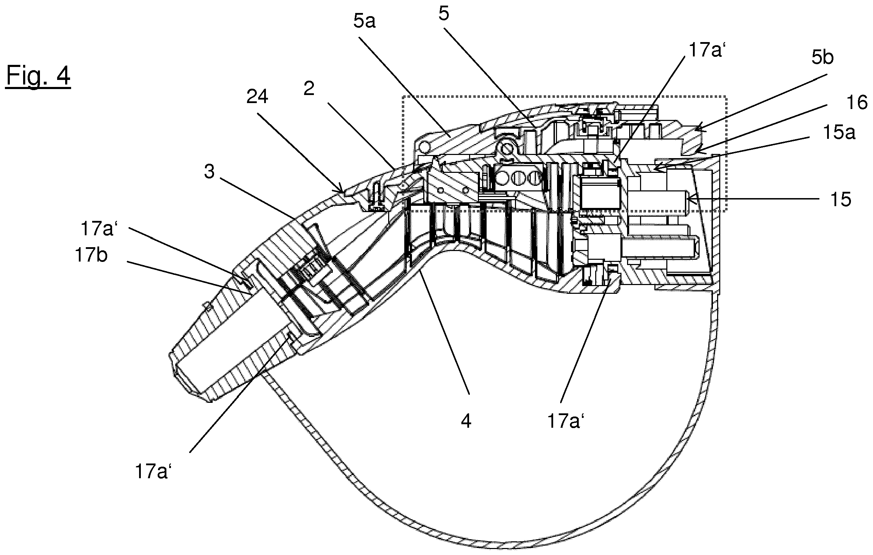

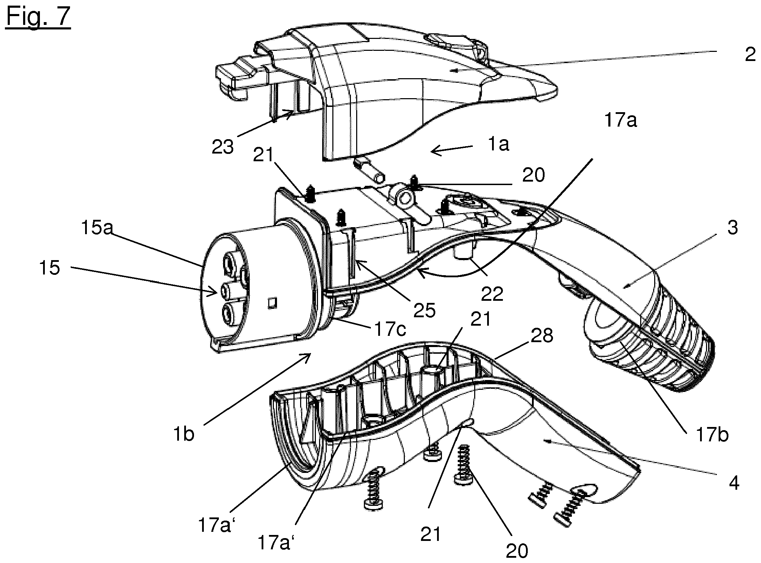

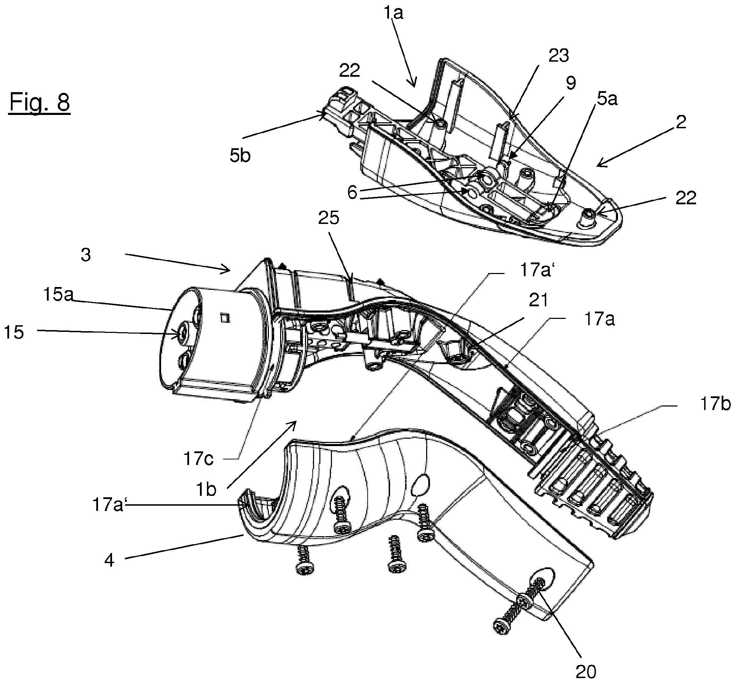

Figur 1 zeigt skizzenhaft eine ganzheitliche Darstellung einer erfindungsgemäßen, als Kupplung oder Stecker ausgebildeten Steckvorrichtung mit angezeigter Steckrichtung "x". Die Fign. 2 und 3 zeigen diese Steckvorrichtung nochmals aus zwei unterschiedlichen perspektivischen Ansichten und die Fign. 4 bis 8 weitere Ansichten, teilweise auch Detailansichten dieser Steckvorrichtung. Wie insbesondere den Fign. 7 oder 8 zu entnehmen, ist die Steckvorrichtung im dargestellten Ausführungsbeispiel beispielhaft eine Kupplung, bei welcher demgemäß die elektrischen Kontakte 15 als weibliche Kontakte oder Kontaktbuchsen ausgebildet sind und vorzugsweise in einem Kontaktbaustein 15a eingesetzt sind.

Wie ferner aus den Figuren ersichtlich, besitzt die Steckvorrichtung ein Gehäuse, d.h. ein von außen betrachtet gemeinsames Gehäuse, innerhalb welchem elektrische Bauteile und eine bewegliche Verriegelungs-Betätigungseinheit 5 mechanisch gehalten sind. Die Verriegelungs-Betätigungseinheit 5 dient zur Verriegelung der Steckvorrichtung im gesteckten Zustand mit einer zu der Steckvorrichtung komplementären, in den Figuren aus Übersichtlichkeitsgründen nicht gezeigten Steckvorrichtung. Den Figuren ist entnehmbar, dass die Steckvorrichtung in der dargestellten bevorzugten Ausführung als eine Ladesteckvorrichtung für Elektrofahrzeuge ausgebildet ist, wofür auch die mechanische Halterung der elektrischen Bauteile und der Verriegelungs-Betätigungseinheit innerhalb dem von außen betrachtet gemeinsamen Gehäuse besonders zweckmäßig ist.

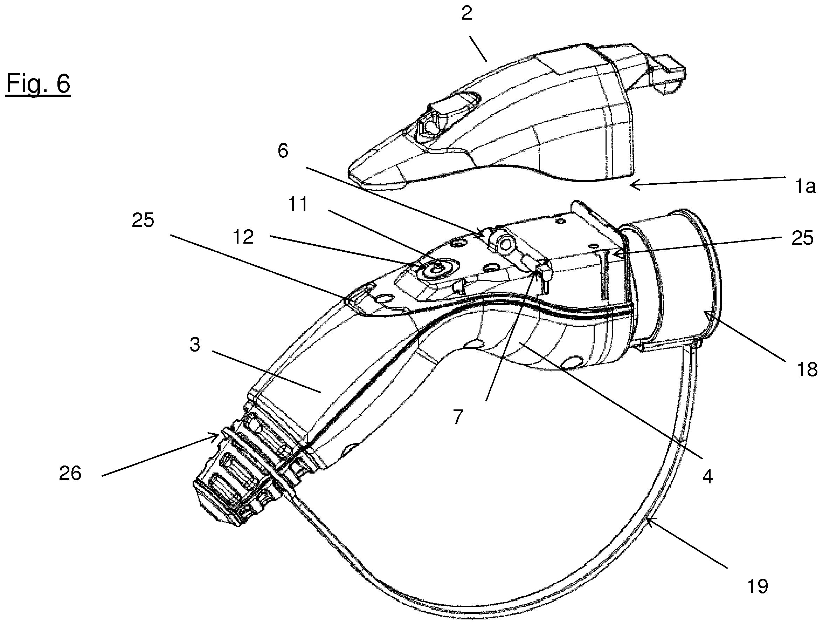

Insbesondere den Figuren 6 bis 8, welche verschiedene Ansichten der Steckvorrichtung nach Figur 1 mit zumindest teilweise auseinandergerissenen Komponenten zeigen, ist entnehmbar, dass das Gehäuse aus wenigstens drei Gehäuseteilen 2, 3, 4 aufgebaut ist, wobei der erste Gehäuseteil 2 zusammen mit einem zweiten Gehäuseteil 3 unter Bildung einer außen am Gehäuse entlanglaufenden Anlagekante 24 (vgl. Fign. 1 bis 4) eine erste Gehäusekammer 1a ausbildet und zwischen dem zweiten Gehäuseteil 3 und wenigstens einem weiteren, dritten Gehäuseteil 4 wenigstens eine weitere Gehäusekammer 1b ausgebildet ist, wobei sich der zweite Gehäuseteil 3 zwischen der erste Gehäusekammer 1a und der wenigstens einen weiteren Gehäusekammer 1b erstreckt. Hierbei ist ferner die Verriegelungs-Betätigungseinheit 5 in der ersten Gehäusekammer 1a mechanisch gehalten und die elektrischen Bauteile sind in der wenigstens einen weiteren Gehäusekammer 1b mechanisch gehalten. Die Gehäusekammer 1a ist jedoch für sich, d.h. von der Gehäusekammer 1b abgeschottet. Es kann somit Wasser/Feuchtigkeit in die Gehäusekammer 1a ein- und austreten, gelangt aber von dort nicht wie bei marktüblichen Geräten in den Innenraum der Gehäusekammer 1b mit den elektrischen Bauteilen.

Zur Minimierung der benötigten Bauteile ist das Gehäuse gemäß den Figuren lediglich aus einem dritten Gehäuseteil 4 aufgebaut. Das zweite Gehäuseteil 3 bildet folglich zum einen mit dem ersten Gehäuseteil 2 und zum anderen mit dem einen dritten Gehäuseteil 4 jeweils eine Gehäusekammer 1a bzw. 1b aus und trennt diese voneinander. Mit anderen Worten ist die erste Gehäusekammer 1a in Bezug auf das zweite Gehäuseteil 3 zu dessen einen Seite hin und die zweite Gehäusekammer 1b in Bezug auf das zweite Gehäuseteil 3 zu dessen gegenüberliegenden anderen Seite hin ausgebildet. Ferner können, wie den Figuren entnehmbar, die erste und/oder zweite Gehäusekammer jeweils weitere Kammerbereiche oder auch Unterkammern ausbilden oder beherbergen, so dass innerhalb einer Gehäusekammer z.B. wiederum zwei oder mehr Unterkammern mit integriert sind. Der Begriff einer Gehäusekammer definiert somit im Sinne der Erfindung einen Hohlraum, der durch zwei Gehäuseteile gebildet ist, die von außen betrachtet, wiederum Teil des gemeinsamen Gehäuses sind. Zur Bildung derartiger Gehäusekammern sind die Gehäuseteile 2, 3 und 4, wie den Figuren zu entnehmen ist, hierzu zweckmäßig schalenartig ausgebildet. Alle Gehäuseteile sind ferner zweckmäßig aus einem oder mehreren Kunststoffen gefertigt.

Zweckmäßig ist hierbei ferner der erste Gehäuseteil 2 an dem zweiten Gehäuseteil 3 und der zweite Gehäuseteil 3 an dem wenigstens einem weiteren dritten Gehäuseteil 4 befestigt, wobei zur Befestigung insbesondere lösbare Befestigungssysteme Anwendung vorgesehen sind, so dass eine individuelle Konfektionierbarkeit und/oder auch nachträgliche Austauschbarkeit von Komponenten gegeben ist.

Hierfür eignen sich beispielsweise Schrauben 20 als Teil eines solchen Befestigungssystems die zunächst durch Durchgangslöcher 21 mit Gewinde geschraubt sind und anschließend in Sacklöcher 22 mit Gewinde eingeschraubt sind. Zur Befestigung des ersten Gehäuseteils 2 an dem zweiten Gehäuseteil 3 sind somit zweckmäßig die hierfür vorgesehenen Durchgangslöcher 21 mit Gewinde an dem zweiten Gehäuseteil 3 und die Sacklöcher 22 mit Gewinde an dem ersten Gehäuseteil 2 ausgebildet und zur Befestigung des zweiten Gehäuseteils 3 an dem dritten Gehäuseteil 4 zweckmäßig die hierfür vorgesehenen Durchgangslöcher 21 mit Gewinde an dem dritten Gehäuseteil 4 und die Sacklöcher 22 mit Gewinde an dem zweiten Gehäuseteil 3. Eine solche Anordnung hat den Vorteil, dass bei zweckbestimmtem Gebrauch der Steckvorrichtung nach außen hervortretende Schraubenköpfe in der Regel nach unten gerichtet sind, so dass hierrüber die Gefahr, dass dort zusätzlich Wasser oder Feuchtigkeit eindringt, minimiert ist. Zur weiteren Abdichtung können ferner zusätzliche Dichtungsmaßnahmen vorgesehen sein, z.B. im Falle von dem vorstehend beschriebenem Befestigungssystem können handelsübliche, in den Figuren jedoch nicht sichtbare Dichtringe insbesondere in den Durchgangslöcher 21 eingesetzt und/oder um die Schrauben 20 gelegt sein. Sind die Gehäuseteile z.B. unter Verwendung eines Mehrkomponenten-Spritzgussverfahrens hergestellt, können solche zusätzliche Dichtungen auch bereits bei Herstellung der Gehäuseteile durch entsprechendes Weichmaterial in die Durchgangslöcher 21 eingefügt werden. Ergänzend oder Alternativ können z.B. auch durch entsprechende Formgebung insbesondere der Durchgangslöcher 21 und/oder deren Gewinde solche zusätzliche Dichtungsmaßnahmen bewirkt werden.

Die Verriegelungs-Betätigungseinheit 5 besitzt zweckmäßig ein von außerhalb des Gehäuses betätigbares Betätigungsende 5a, und ein Verriegelungsende 5b, welches sich aus der ersten Gehäusekammer 1a hinaus nach außen aus dem Gehäuse erstreckt. Das Betätigungsende 5a kann hierzu z.B. ein sich aus der ersten Gehäusekammer 1a hinaus nach außen aus dem Gehäuse ersteckendes Druckstück bereitstellen.

Wie den Figuren ferner entnehmbar, ist besonders bevorzugt durch entsprechende Formgebung des ersten Gehäuseteils 2 der wenigstens eine Durchgang für die Verriegelungs-Betätigungseinheit 5 aus der ersten Gehäusekammer 1a hinaus nach außen aus dem Gehäuse ausgebildet, z.B. die den Figuren entnehmbare Durchführöffnung 10a für das Betätigungsende 5a und die Durchführöffnung 10b für das Verriegelungsende 5b. Ferner erstreckt sich durch entsprechende Formgebung des zweiten Gehäuseteils 3 der Körper des zweiten Gehäuseteils 3 im Innern des Gehäuses in Richtung des ersten Gehäuseteils 2 zumindest teilweise über den Bereich der außen am Gehäuse entlanglaufenden Anlagekante 24 hinaus. Hierdurch ist besonders effektiv gewährleistet, dass in die erste Gehäusekammer 1a eindringende Feuchtigkeit nach außerhalb des Gehäuses abgeführt und somit jeglicher Stauwasserbildung in der ersten Gehäusekammer 1a entgegengewirkt wird. Bevorzugt sitzt somit der erste Gehäuseteil 2 quasi auf dem zweiten Gehäuseteil 3 und umgreift dieses teilweise. Ferner ist das zweite Gehäuseteil 3 an der zum ersten Gehäuseteil 2 blickenden Seite zweckmäßig mit in Richtung der Anlagekante 24 verlaufenden Führungsnuten 25 versehen, in welche an der zum zweiten Gehäuseteil 3 blickenden Seite des ersten Gehäuseteils 2 komplementär ausgebildete und gleichermaßen in Richtung der Anlagekante 24 verlaufende Führungsstege 23 eingreifen können. Hierdurch wird einerseits eine Lagepositionierung des ersten Gehäuseteils 2 an dem zweiten Gehäuseteil 3 bewirkt und folglich die einfache Montage weitergehend vereinfacht. Andererseits können hierdurch gezielt Ablaufkanäle für nach außerhalb des Gehäuses abzuführende(s) Feuchtigkeit/Wasser geschaffen sein.

Zur Abdichtung der wenigstens einen weiteren Gehäusekammer 1b, innerhalb welcher die elektrischen Bauteile angeordnet oder zumindest gehalten sind, gegenüber von außen einwirkender Feuchtigkeit, sind vorzugsweise Dichtungseinrichtungen angeordnet, wobei insbesondere an den Außenkanten des zweiten Gehäuseteils 3 und des wenigstens einen weiteren dritten Gehäuseteils 4 derartige Dichtungseinrichtungen auch mit sich entlang den Außenkanten erstreckenden Nuten 17a und/oder Stege 17a' ausgebildet sind. In Bereichen, in denen die Außenkanten des zweiten Gehäuseteils 3 an die Außenkanten des wenigstens einen weiteren dritten Gehäuseteils 4 aneinander gesetzt sind, sind die Nuten 17a und/oder Stege 17a' als Teil der dortigen Dichtungseinrichtungen folglich zweckmäßig so angeordnet, dass dortige Stege 17a' in komplementär ausgebildete Nuten 17a eingreifen können. Für eine verbesserte Abdichtwirkung auch bei zweckbestimmten Einsatz der Steckvorrichtung sind die Nuten 17a hierbei zweckmäßig an dem zweiten Gehäuseteil 3 und die Stege 17a' an dem weiteren dritten Gehäuseteil 4 angeordnet.

Erkennbar bildet zweckmäßig die wenigstens eine weitere Gehäusekammer 1b eine Kabeldurchführungsöffnung für ein von außerhalb des Gehäuses kommendes, an die Steckvorrichtung angeschlossenes oder anschließbares Kabel aus. Ferner ist in die Kabeldurchführungsöffnung zur weiteren Abdichtung zweckmäßig eine Ringdichtung 17b, insbesondere aus einem Weichmaterial, eingesetzt, aufgenommen, einsetzbar oder aufnehmbar, insbesondere eine Ringdichtung 17b, die zusätzlich einen Knickschutz für ein darin geführtes Kabel (nicht dargestellt) bereitstellt. Insbesondere hierfür kann die Ringdichtung, wie in den Figuren zu sehen, z.B. axial in Richtung eines darin geführten Kabels verlängert sein (nicht dargestellt). Ferner bildet zweckmäßig die wenigstens eine weitere Gehäusekammer 1b erkennbar eine Einsetzöffnung für den Kontaktbausein 15a aus, der folglich hierüber in das Gehäuses eingesetzt oder einsetzbar ist. Auch hierbei ist zur weiteren Abdichtung zweckmäßig eine Ringdichtung 17c in der Einsetzöffnung eingesetzt, aufgenommen, einsetzbar oder aufnehmbar, welche den Kontaktbausein 15a umschließt. Insbesondere auch für eine einfache Montage werden die Kabeldurchführungsöffnung und die Einsetzöffnung für den Kontaktbausein 15a durch Außenkanten des zweiten Gehäuseteils 3 und des wenigstens einen weiteren dritten Gehäuseteils 4 definiert.

In Bereichen, in denen die Außenkanten des zweiten Gehäuseteils 3 oder die Außenkanten des wenigstens einen weiteren dritten Gehäuseteils 4 gegen die Ringdichtung 17b oder 17c anliegen, sind an diesen Außenkanten zweckmäßig Stege 17a' als Teil dortiger Dichtungseinrichtungen angeordnet, an welchen folglich die Ringdichtung 17b oder 17c aufnehmbar ist und die vorzugsweise auch an oder in die montierte Ringdichtung 17b oder 17c angepresst bzw. eingepresst sind.

Zur Abdeckung der in dem Kontaktbaustein 15a eingesetzten elektrischen Kontakte 15, d.h. wenn die Steckvorrichtung gerade nicht zum zweckbestimmten Einsatz kommt, ist vorzugsweise eine manuell betätigbare Abdeckkappe 18 vorgesehen, die zweckmäßig an einer Halterungsvorrichtung 19 an der Ladesteckvorrichtung gehalten ist, so dass auch die vom Kontaktbaustein 15a gelöste Abdeckkappe 18, d.h. insbesondere wenn die Steckvorrichtung zweckbestimmt eingesetzt wird, unverlierbar an der Ladesteckvorrichtung gehalten ist. Hierzu kann die Halterungsvorrichtung 19 z.B. in Art eines mit der Abdeckkappe 18 fest verbundenen Kunststoffstreifens hergestellt sein, der z.B. aus einem Stück mit Abdeckkappe 18 hergestellt ist, und an einem von der Abdeckkappe 18 entfernten Ende mit einer Öse 26 versehen sein, die ein an die Steckvorrichtung angeschlossenes Kabel oder z.B. eine axial in Richtung eines in der Ringdichtung 17b geführten Kabels verlängerte Ringdichtung 17b umschließt.

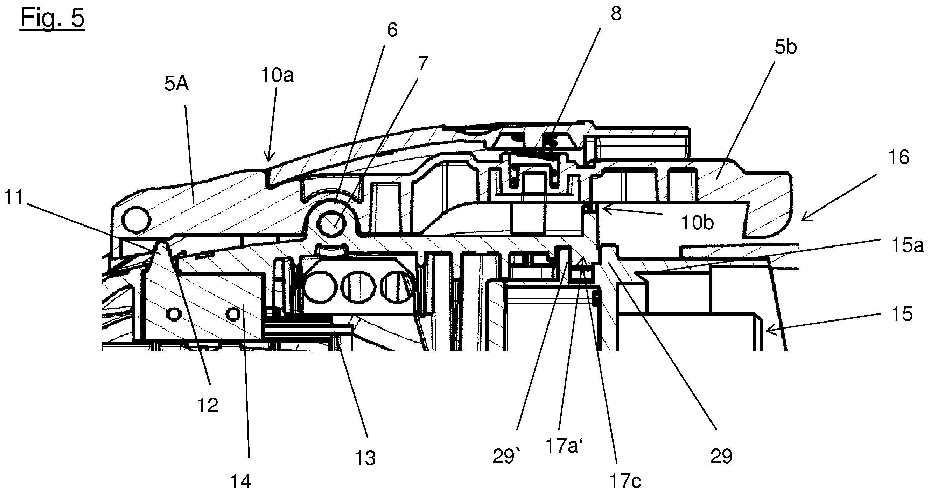

Je nach Anforderung ist ferner eine Sicherungseinrichtung 14 zur Freigabe sowie zur Nichtfreigabe eines Stromflusses, insbesondere eines Ladestroms im Falle einer Ladesteckvorrichtung, vorgesehen, wobei in diesem Fall die Verriegelungs-Betätigungseinheit 5 bevorzugt zwischen einer ersten Stellung zur Verriegelung der Steckvorrichtung und einer zweiten Stellung beweglich gehalten ist und mit der Sicherungseinrichtung 14 zweckmäßig gekoppelt ist, derart, dass der Sicherungseinrichtung 14 zur Anzeige gelangt, ob die Verriegelungs-Betätigungseinheit 5 in der ersten oder zweiten Stellung ist. Eine solche Kopplung kann z.B. über einen Schalter bewirkt werden, der mit dem Betätigungsende 5a zusammenwirkt. Wenn der Schalter sich hierbei der Einfachheit halber zweckmäßig mit einem Ende 11 durch das zweite Gehäuseteil 3 hindurch in Richtung des Betätigungsendes 5a erstreckt, ist zur Abdichtung des hierfür erforderlichen Durchgangs am zweiten Gehäuseteil 3 bevorzugt eine Ringdichtung 12 vorgesehen, die in diesem Durchgang oder an diesem Durchgang anliegt und/oder die, wie es insbesondere der Fig. 5 zu entnehmen ist, das sich durch das zweite Gehäuseteil 3 hindurch erstreckende Ende 11 des Schalters umschließt und in Folge dessen, den Durchgang abdichtend an der Innenwandung des Durchgangs anliegt und/oder entlanggleitet.

Je nach Stellung der Verriegelungs-Betätigungseinheit 5 kann somit über die Sicherungseinrichtung 14 zur Freigabe oder zur Nichtfreigabe eines Stromflusses ein Steuersignalkreis geschlossen bzw. geöffnet werden. Insbesondere im Falle eine Ladesteckvorrichtung ist die Sicherungseinrichtung hierbei zweckmäßig über entsprechende Kabel 13 mit in dem Kontaktbaustein eingesetzten Steuerkontakten verbunden, so dass hierüber bei geschlossenem Steuersignalkreis, wie vorstehend gemäß Stand der Technik beschrieben, eine entsprechende Datenübertragung, Leitungserkennung bzw. Verriegelungsanzeige erfolgen kann. Ferner kann zusätzlich eine Kodierungseinrichtung in der Sicherungseinrichtung 14 oder gekoppelt mit der Sicherungseinrichtung 14 vorgesehen sein, z.B. auf einer hierfür separat vorgesehenen Platine.

In Folge ist die Verriegelungs-Betätigungseinheit 5 somit bevorzugt mit Steuerkontakten gekoppelt, um letztlich über diese im gesteckten Zustand anzuzeigen, ob sie verriegelt oder nicht.

Die Verriegelungs-Betätigungseinheit 5 kann z.B. als eine Art Wippe ausgebildet sein. Hierbei bildet zweckmäßig das Verriegelungsende 5b einen ersten Hebelarm und das Betätigungsende 5a einen zweiten Hebelarm. Der Angelpunkt, um welchen sich in diesem Fall die Verriegelungs-Betätigungseinheit 5 verschwenken kann, kann zweckmäßig, durch eine Lagerungseinrichtung definiert sein, wie sie den Figuren 4 bis 8 zu entnehmen ist. Hierbei sind Lagerungseinrichtungsteile 6 an der Verriegelungs-Betätigungseinheit 5 und an dem zweiten Gehäuseteil 3 angeordnet, durch welche jeweils quer zum Verriegelungsende 5b und Betätigungsende 5a verlaufende Durchgangsöffnungen zur Aufnahme ein und derselben Achse ausgebildet sind. Als Achse dient z.B. ein Stift oder Bolzen 7, der folglich einfach durch die Durchgangsöffnungen der Lagerungseinrichtungsteile 6 gesteckt ist. Zur Fixierung kann z.B. gemäß Fig. 8 im Innern des ersten Gehäuseteils eine Fixierungseinrichtung 9 ausgebildet sein, die bei Montage des ersten Gehäuseteils 2 mit dem zweiten Gehäuseteil 3 den Stift 7 an dessen gegenüberliegenden Stiftende einschließt. Eine derartige Fixierungseinrichtung 9 kann somit auf einfache Weise durch entsprechende Formgebung bei der Herstellung des ersten Gehäuseteils 2 berücksichtigt werden, z.B. durch Ausbildung entsprechender Stege. Selbstverständlich ist auch eine anderweitige Ausbildung eines Angelpunkts umsetzbar.

Zweckmäßig ist ferner das Verriegelungsende 5b vorgespannt in der Verriegelungsstellung gehalten, z.B. mittels einer zwischen dem Verriegelungsende 5b und dem ersten Gehäuse 2 angeordneten Feder 8. Hierdurch ist einem selbstständigen Lösen des Verriegelungsendes 5b im gesteckten Zustand entgegengewirkt. Zum Lösen des Verriegelungsendes 5b muss folglich auf das Betätigungsende 5a entgegen der Vorspannkraft Druck ausgeübt werden. Zweckmäßig ist an dem Verriegelungsende 5b noch eine in Steckrichtung blickende Phase 16 ausgebildet, die eine Verriegelung des Verriegelungsendes 5b beim Stecken mit einer komplementären Steckvorrichtung ermöglicht, ohne manuell Druck auf das Betätigungsende 5a entgegen der Vorspannkraft ausüben zu müssen. Ist das Verriegelungsende 5b in der Verriegelungsstellung, ist demnach über die Sicherungseinrichtung 14, insbesondere aufgrund der gemäß dargestellten Ausführungsform dann bewirkten Schalterstellung, ein elektrisch leitfähiges Kontaktteil zum Schließen eines Steuersignalkreis, insbesondere Steuersignalkreis-Teilbereichs, geschlossen, so dass zweckmäßig erst im Falle eines gesteckten Zustandes der Steuersignalkreis insgesamt geschlossen.

Wird das Verriegelungsende 5b aus der Verriegelungsstellung verschwenkt, ist demnach über die Sicherungseinrichtung 14, insbesondere aufgrund der gemäß dargestellten Ausführungsform dann bewirkten Schalterstellung, ein elektrisch leitfähiges Kontaktteil zum Schließen eines Steuersignalkreis, insbesondere Steuersignalkreis-Teilbereichs, geöffnet, so dass zweckmäßig sowohl im ungesteckten Zustand und auch im Falle eines gesteckten Zustandes der Steuersignalkreis insgesamt geöffnet ist.

Insbesondere im Falle einer Ladesteckvorrichtung kann folglich jegliche Datenübertragung, Leitungserkennung bzw. Verriegelungsanzeige, wie vorstehend gemäß Stand der Technik beschrieben, lediglich im Falle eines gesteckten und hierbei verriegelten Zustandes erfolgen.

### Bezugszeichenliste:

- 1a: erste Gehäusekammer;
- 1b: wenigstes eine zweite Gehäusekammer;
- 2: erster Gehäuseteil;
- 3: zweiter Gehäuseteil;
- 4: dritter Gehäuseteil ;
- 5: Verriegelungs-Betätigungseinheit;
- 5a: Betätigungsende;
- 5b: Verriegelungsende;
- 6: Lagerungseinrichtungsteile an Verriegelungs-Betätigungseinheit und an zweitem Gehäuseteil;
- 7: Stift;
- 8: Feder;
- 9: Fixierungseinrichtung an erstem Gehäuseteil;
- 10a: Durchführöffnung für Betätigungsende;
- 10b: Durchführöffnung für Verriegelungsende;
- 11: Schalterende;
- 12: Ringdichtung für Schalterende;
- 13: Kabel von Sicherungseinrichtung zu Steuerkontakten;
- 14: Sicherungseinrichtung;
- 15: elektrische Kontakte;
- 15a: Kontaktbaustein;
- 16: Phase am Verriegelungsende;
- 17a: Nut als Teil einer Dichteinrichtung;
- 17a': Steg als Teil einer Dichteinrichtung;
- 17b: Ringdichtung für Kabel;
- 17c: Ringdichtung für Kontaktbaustein;
- 18: Abdeckkappe für Kontaktbaustein;
- 19: Halterungseinrichtung;
- 20: Schrauben als Teil eines Befestigungssystems;
- 21: Durchgangslöcher mit Gewinde als Teil des Befestigungssystems;
- 22: Sacklöcher mit Gewinde als Teil des Befestigungssystems;
- 23: Führungsstege am ersten Gehäuseteil;
- 24: Anlagekante;
- 25: Führungsnute am zweiten Gehäuseteil für Führungsstege am ersten Gehäuseteil;
- 26: Öse;

## Patentansprüche

1. Als Ladesteckvorrichtung für Elektrofahrzeuge ausgebildete Steckvorrichtung umfassend:
elektrische Bauteile und eine bewegliche Verriegelungs-Betätigungseinheit (5) zur Verriegelung der Steckvorrichtung im gesteckten Zustand mit einer zu der Steckvorrichtung komplementären Steckvorrichtung, sowie ein Gehäuse, innerhalb welchem die elektrischen Bauteile und die Verriegelungs-Betätigungseinheit mechanisch gehalten sind,
**dadurch gekennzeichnet, dass**
das Gehäuse aus wenigstens drei Gehäuseteilen (2, 3, 4) aufgebaut ist, wobei
der erste Gehäuseteil (2) zusammen mit einem zweiten Gehäuseteil (3) unter Bildung einer außen am Gehäuse entlanglaufenden Anlagekante (24) eine erste Gehäusekammer (1a) ausbildet und zwischen dem zweiten Gehäuseteil (3) und wenigstens einem weiteren, dritten Gehäuseteil (4) wenigstens eine weitere Gehäusekammer (1b) ausgebildet ist, wobei sich der zweite Gehäuseteil (3) zwischen der ersten Gehäusekammer (1a) und der wenigstens einen weiteren Gehäusekammer (1b) erstreckt, die Verriegelungs-Betätigungseinheit (5) in der ersten Gehäusekammer (1a) mechanisch gehalten ist und die elektrischen Bauteile in der wenigstens einen weiteren Gehäusekammer (1b) mechanisch gehalten sind.

2. Steckvorrichtung nach Anspruch 1, wobei die Verriegelungs-Betätigungseinheit (5) ein von außerhalb des Gehäuses betätigbares Betätigungsende (5a) und ein Verriegelungsende (5b) besitzt, welches sich aus der ersten Gehäusekammer (1a) hinaus nach außen aus dem Gehäuse erstreckt.

3. Steckvorrichtung nach Anspruch 1 oder 2, wobei durch entsprechende Formgebung des ersten Gehäuseteils (2) für die Verriegelungs-Betätigungseinheit wenigstens ein Durchgang aus der ersten Gehäusekammer (1a) hinaus nach außen aus dem Gehäuse ausgebildet ist und sich der Körper des zweiten Gehäuseteils (3) im Innern des Gehäuses in Richtung des ersten Gehäuseteils (2) zumindest teilweise über die außen am Gehäuse entlanglaufende Anlagekante (24) hinausgehend erstreckt.

4. Steckvorrichtung nach einem der vorstehenden Ansprüche, wobei zur Abdichtung der wenigstens einen weiteren Gehäusekammer (1b) gegenüber von außen einwirkender Feuchtigkeit Dichtungseinrichtungen angeordnet sind, wobei insbesondere an den Außenkanten des zweiten Gehäuseteils (3) und des wenigstens einen weiteren dritten Gehäuseteils (4) Dichtungseinrichtungen auch mit Nuten (17a) und/oder Stege (17a') ausgebildet sind.

5. Steckvorrichtung nach einem der vorstehenden Ansprüche, wobei die wenigstens eine weitere Gehäusekammer (1b) eine Kabeldurchführungsöffnung für ein von außerhalb des Gehäuses kommendes, an die Steckvorrichtung angeschlossenes oder anschließbares Kabel ausbildet, in welche eine Ringdichtung (17b) eingesetzt, aufgenommen, einsetzbar oder aufnehmbar ist, insbesondere eine einen Knickschutz bereitstellende Ringdichtung.

6. Steckvorrichtung nach einem der vorstehenden Ansprüche, wobei die wenigstens eine weitere Gehäusekammer (1b) eine Einsetzöffnung für einen in das Gehäuses eingesetzten oder einsetzbaren Kontaktbaustein (15a) mit darin eingesetzten elektrischen Kontakten (15) ausbildet, in welche eine Ringdichtung (17c) eingesetzt, aufgenommen, einsetzbar oder aufnehmbar ist.

7. Steckvorrichtung nach einem der vorstehenden Ansprüche, wobei die Ladesteckvorrichtung eine über eine Halterungsvorrichtung (19) an der Ladesteckvorrichtung gehaltene, manuell betätigbare Abdeckkappe (18) zur Abdeckung von in einem Kontaktbaustein (15a) eingesetzten elektrischen Kontakten (15) besitzt.

8. Steckvorrichtung nach einem der vorstehenden Ansprüche, wobei der erste Gehäuseteil (2) an dem zweiten Gehäuseteil (3) und der zweite Gehäuseteil (3) an dem wenigstens einem weiteren dritten Gehäuseteil (4) befestigt ist, insbesondere unter Nutzung lösbarer Befestigungssysteme.

9. Steckvorrichtung nach einem der vorstehenden Ansprüche, ferner umfassend eine Sicherungseinrichtung (14) zur Freigabe sowie zur Nichtfreigabe eines Ladestroms.

10. Steckvorrichtung nach vorstehendem Anspruch, wobei die Verriegelungs-Betätigungseinheit (5) zwischen einer ersten Stellung zur Verriegelung der Steckvorrichtung und einer zweiten Stellung beweglich gehalten ist und mit der Sicherungseinrichtung (14) gekoppelt ist, derart, dass der Sicherungseinrichtung zur Anzeige gelangt, ob die Verriegelungs-Betätigungseinheit in der ersten oder zweiten Stellung ist.

## Claims

1. A plug-type device in the form of a charging plug-type device for electric vehicles, comprising:
electrical components and a movable locking actuator unit (5) for locking the plug-type device in its plugged-in state with a complementary plug-type device; and
a housing in which the electrical components and the locking actuator unit are supported mechanically;
**characterized in that**
the housing comprised of at least three housing parts (2, 3, 4); wherein
the first housing part (2) together with a second housing part (3) defines a first housing cavity (1a) thereby forming an abutment edge (24) that extends along the outer surface of the housing, and wherein at least one further housing cavity (1b) is defined between the second housing part (3) and at least one further, third housing part (4), wherein the second housing part (3) extends between the first housing cavity (1a) and the at least one further housing cavity (1b), wherein the locking actuator unit (5) is mechanically supported in the first housing cavity (1a) and the electrical components are mechanically supported in the at least one further housing cavity (1b).

2. The plug-type device according to claim 1, wherein the locking actuator unit (5) has an actuator end (5a) that is operable from outside, and a locking end (5b) extending from the first housing cavity (1a) outwardly out of the housing.

3. The plug-type device according to claim 1 or 2, wherein the first housing part (2) is appropriately shaped so as to provide at least one passage from the first housing cavity (1a) outwardly out of the housing for the locking actuator unit, and wherein in the interior of the housing the body of the second housing part (3) extends towards the first housing part (2) at least partially beyond the abutment edge (24) that extends along the outer surface of the housing.

4. The plug-type device according to any one of the preceding claims, wherein sealing means are arranged for sealing the at least one further housing cavity (1b) against the impact of external moisture, wherein in particular at the outer edges of the second housing part (3) and the at least one further, third housing part (4), sealing means are formed with grooves (17a) and/or ridges (17a').

5. The plug-type device according to any one of the preceding claims, wherein the at least one further housing cavity (1b) defines a cable feedthrough opening for a cable coming from outside of the housing and being connected or connectable to the plug-type device, in which opening a ring seal (17b) is placed, accommodated, insertable or accommodatable, in particular a ring seal providing kink protection.

6. The plug-type device according to any one of the preceding claims, wherein the at least one further housing cavity (1b) defines an insertion opening for a contact module (15a) inserted in or insertable into the housing and having electrical terminals inserted therein (15), in which opening a ring seal (17c) is placed, accommodated, insertable or accommodatable.

7. The plug-type device according to any one of the preceding claims, wherein the charging plug-type device has a covering cap (18) secured to the charging plug-type device via a holding means (19) which is manually operable for covering electrical terminals (15) inserted in a contact module (15a).

8. The plug-type device according to any one of the preceding claims, wherein the first housing part (2) is secured to the second housing part (3) and the second housing part (3) is secured to the at least one further, third housing part (4), in particular using releasable fastening systems.

9. The plug-type device according to any one of the preceding claims, further comprising security means (14) for enabling and for not enabling a charging current.

10. The plug-type device according to the preceding claim, wherein the locking actuator unit (5) is supported so as to be movable between a first position for locking the plug-type device and a second position, and is coupled to said security means (14) such that the security means is notified about whether the locking actuator unit is in the first or in the second position.

## Revendications

1. Dispositif enfichable réalisé sous la forme d'un dispositif enfichable de charge pour véhicules électriques, comprenant :
des composants électriques et une unité d'actionnement de verrouillage (5) mobile pour le verrouillage du dispositif enfichable une fois celui-ci enfiché avec un dispositif enfichable complémentaire du dispositif enfichable, ainsi qu'un boîtier, à l'intérieur duquel les composants électriques et l'unité d'actionnement et de verrouillage sont retenus mécaniquement,
**caractérisé en ce que** :
le boîtier est composé d'au moins trois parties de boîtier (2, 3, 4), où
la première partie de boîtier (2) forme conjointement avec une deuxième partie de boîtier (3) une première chambre de boîtier (la), entraînant la formation d'un bord d'appui (24) passant le long du boîtier à l'extérieur, et au moins une autre chambre de boîtier (1b) est formée entre la deuxième partie de boîtier (3) et au moins une autre troisième partie de boîtier (4), où la deuxième partie de boîtier (3) s'étend entre la première chambre de boîtier (1a) et ladite au moins une autre chambre de boîtier (1b), l'unité d'actionnement et de verrouillage (5) est retenue mécaniquement dans la première chambre de boîtier (1a) et les composants électriques sont retenus mécaniquement dans ladite au moins une autre chambre de boîtier (1b).

2. Dispositif enfichable selon la revendication 1, dans lequel l'unité d'actionnement et de verrouillage (5) possède une extrémité d'actionnement (5a) pouvant être actionnée depuis l'extérieur du boîtier et une extrémité de verrouillage (5a), laquelle s'étend au-delà de la première chambre de boîtier (la) vers l'extérieur hors du boîtier.

3. Dispositif enfichable selon la revendication 1 ou 2, dans lequel une mise en forme correspondante de la première partie de boîtier (2) pour l'unité d'actionnement et de verrouillage permet la formation d'au moins un passage au-delà de la première chambre de boîtier (1a) vers l'extérieur hors du boîtier et le corps de la deuxième partie de boîtier (3) s'étend à l'intérieur du boîtier en direction de la première partie de boîtier (2) au moins en partie au-delà du bord d'appui (24) passant le long du boîtier à l'extérieur.

4. Dispositif enfichable selon l'une quelconque des revendications précédentes, dans lequel des dispositifs d'étanchéité sont destinés à étanchéifier ladite au moins une autre chambre de boîtier (1b) vis-à-vis de l'humidité agissant de l'extérieur, dans lequel des dispositifs d'étanchéité également pourvus de rainures (17a) et/ou de nervures (17a') sont en particulier formés sur les bords extérieurs de la deuxième partie de boîtier (3) et de ladite au moins une autre troisième partie de boîtier (4).

5. Dispositif enfichable selon l'une quelconque des revendications précédentes, dans lequel ladite au moins une autre chambre de boîtier (1b) forme une ouverture de passage de câble pour un câble venant de l'extérieur du boîtier et raccordé ou pouvant être raccordé au dispositif enfichable, ouverture dans laquelle un joint annulaire (17b) est inséré, logé, peut être inséré ou peut être logé, en particulier un joint annulaire fournissant une protection contre les torsions.

6. Dispositif enfichable selon l'une quelconque des revendications précédentes, dans lequel ladite au moins une autre chambre de boîtier (1b) forme une ouverture d'insertion pour un module de contact (15a) inséré ou pouvant être inséré dans le boîtier et dans lequel sont insérés des contacts électriques (15), dans lesquels un joint annulaire (17c) est inséré, logé, peut être inséré ou peut être logé.

7. Dispositif enfichable selon l'une quelconque des revendications précédentes, le dispositif enfichable de charge possédant un capuchon de recouvrement (18) pouvant être actionné manuellement, retenu sur le dispositif enfichable de charge par l'intermédiaire d'un dispositif de retenue (19), destiné à recouvrir des contacts électriques (15) insérés dans un module de contact (15a).

8. Dispositif enfichable selon l'une quelconque des revendications précédentes, dans lequel la première partie de boîtier (2) est fixée à la deuxième partie de boîtier (3) et la deuxième partie de boîtier (3) est fixée à ladite au moins une autre troisième partie de boîtier (4), en particulier au moyen de systèmes de fixation libérables.

9. Dispositif enfichable selon l'une quelconque des revendications précédentes, comprenant en outre un dispositif de sécurité (14) pour l'établissement ainsi que pour le non-établissement d'un courant de charge.

10. Dispositif enfichable selon la revendication précédente, dans lequel l'unité d'actionnement et de verrouillage (5) est retenue mobile entre une première position pour le verrouillage du dispositif enfichable et une deuxième position et est accouplée au dispositif de sécurité (14), de telle sorte que le dispositif de sécurité parvient à afficher si l'unité d'actionnement et de verrouillage se trouve dans la première ou la deuxième position.
